# EUROPÄISCHE PATENTANMELDUNG

(11) **EP 3 379 116 A1**
(43) Veröffentlichungstag der Anmeldung: **26.09.2018**
(21) Anmeldenummer: 16865596.7
(22) Anmeldetag: 07.09.2016
(51) Int. Cl.: F16K 5/08, F16K 5/20

(54) **KUGELVENTIL UND DICHTELEMENT FÜR EIN KUGELVENTIL**

(30) Priorität: 19.11.2015 CN 201510802493; 08.06.2016 CN 201610405299
(71) Anmelder: Schaeffler Technologies AG & Co. KG, 91074 Herzogenaurach (DE)
(72) Erfinder: LIU, Xin, Shanghai 201805 (CN); ZHANG, Yuelin, Taicang Jiangsu 215400 (CN); NIEBLING, Uwe, Diespeck 91456 (DE); ARIMA, Gilson, Sorocaba 18065-485 (BR); LI, Meng, Shanghai 201805 (CN); ZHOU, Huilan, Taicang Jiangsu 215400 (CN); WICHER, Sven, 91448 Emskirchen (DE)
(86) Internationale Anmeldenummer: PCT/CN2016/098326
(87) Internationale Veröffentlichungsnummer: WO 2017/084418

(57) **Zusammenfassung**

Ein Kugelventil und ein Dichtungsteil für ein Kugelventil, wobei das Dichtungsteil parallel zur Zentralachse einen ersten und einen zweiten Dichtungsring umfasst, die Materialien des ersten und zweiten Dichtungsrings unterschiedlich sind, der erste Dichtungsring an der in Axialrichtung auf den Kugelkörper im Kugelventil gerichteten Seite des zweiten Dichtungsrings angeordnet ist und verwendet wird, um mit der Kugelfläche des Kugelkörpers in Kontakt zu treten und eine Dichtung zu realisieren; und wobei der erste und der zweite Dichtungsring fest angeordnet sind und der erste Dichtungsring eine durch Stanzen geformte ringförmige PTFE-Scheibe ist. Da der Reibungskoeffizient von PTFE sehr niedrig ist, ist das Reibungsdrehmoment zwischen dem ersten Dichtungsring und der Kugelfläche des Kugelkörpers relativ klein, der erste Dichtungsring verschleißt nicht so leicht und es tritt nicht so leicht das Problem eines Verlusts der Dichtungswirkung auf. Außerdem ist bei einem durch Stanzen geformten ersten Dichtungsring der Bearbeitungsprozess im Vergleich zu anderen Bearbeitungsprozessen einfacher und es können unter Nutzung derselben Stanzform eine Massenproduktion des ersten Dichtungsrings realisiert, die Produktionseffizienz für das erste Dichtungsteil gesteigert und die Produktionskosten für das erste Dichtungsteil gesenkt werden.

## Beschreibung

Die vorliegende Anmeldung beansprucht die Priorität der am 19.11.2015 beim Chinesischen Patentamt eingereichten chinesischen Patentanmeldung mit der Anmeldenummer 201510802493.5 und der Erfindungsbezeichnung **"Ein Kugelventil und ein für ein Kugelventil verwendetes Dichtungsteil",** wobei deren vollständiger Inhalt durch Querverweis in den vorliegenden Gegenstand mit einbezogen wird.

Die vorliegende Anmeldung beansprucht die Priorität der am 08.06.2016 beim Chinesischen Patentamt eingereichten chinesischen Patentanmeldung mit der Anmeldenummer 201610405299.8 und der Erfindungsbezeichnung **"Ein Kugelventil und ein für ein Kugelventil verwendetes Dichtungsteil",** wobei deren vollständiger Inhalt durch Querverweis in den vorliegenden Gegenstand mit einbezogen wird.

### Technisches Gebiet

Die vorliegende Erfindung betrifft das technische Gebiet der Kugelventile und insbesondere ein Kugelventil und ein für ein Kugelventil verwendetes Dichtungsteil.

### Allgemeiner Stand der Technik

Ein Kugelventil kann die Fließbewegung eines Mediums starten oder unterbrechen und umfasst einen Kugelkörper und einen Ventilstab, wobei an der Kugelfläche des Kugelkörpers mehrere Passagen für das Durchfließen des Mediums angeordnet sind, durch das Drehen des Ventilstabs der Kugelkörper mitgenommen und gedreht werden kann und somit die Passagen geöffnet oder geschlossen werden und die Fließbewegung des Mediums gestartet oder unterbrochen wird. Um das Auftreten von Leckagen des Mediums an Kugelkörper oder Kugelfläche zu verhindern, ist im Kugelventil ein Dichtungsteil angeordnet.

Das Dichtungsteil umfasst einen ersten und einen zweiten Dichtungsring, die in Axialrichtung nebeneinander angeordnet sind, wobei der erste Dichtungsring mit der Kugelfläche des Kugelkörpers in Kontakt steht, um eine Dichtung zu realisieren und zu verhindern, dass das Medium zwischen der Dichtungsfläche des ersten Dichtungsrings und der Kugelfläche des Kugelkörpers entweicht. Die Materialien des ersten und zweiten Dichtungsrings sind unterschiedlich, wobei das Material des ersten Dichtungsrings PVDF (Poly(vinylidene fluoride), Polyvinylidenfluorid) ist.

Allerdings ist der Reibungskoeffizient von PVDF relativ groß und es entsteht leicht ein Verschleiß des ersten Dichtungsrings, wenn der Kugelkörper gegenüber dem ersten Dichtungsring rotiert, sodass die Dichtungswirkung verloren geht.

### Kurzdarstellung der Erfindung

Die von der vorliegenden Erfindung zu lösende Aufgabe betrifft den bei Dichtungsteilen in Kugelventilen des Stands der Technik leicht auftretenden Verschleiß und den daraus resultierenden Verlust der Dichtungswirkung.

Um die obenstehende Aufgabe zu lösen, stellt die vorliegende Erfindung ein Dichtungsteil für ein Kugelventil bereit, das parallel zur Zentralachse einen ersten und einen zweiten Dichtungsring umfasst, wobei die Materialien des ersten und zweiten Dichtungsrings unterschiedlich sind, der erste Dichtungsring an der in Axialrichtung auf den Kugelkörper im Kugelventil gerichteten Seite des zweiten Dichtungsrings angeordnet ist und er verwendet wird, um mit der Kugelfläche des Kugelkörpers in Kontakt zu treten und eine Dichtung zu realisieren; wobei der erste und der zweite Dichtungsring fest angeordnet sind und der erste Dichtungsring eine durch Stanzen geformte ringförmige PTFE-Scheibe ist.

Wahlweise ist der erste Dichtungsring in Axialrichtung einer aufgeweiteten Öffnung abgewandt, die von der ringförmigen Dichtungsfläche des zweiten Dichtungsrings eingefasst wird.

Wahlweise ist die Dichtungsfläche eine Kegelstumpffläche.

Wahlweise ist die Dichtungsfläche eine Kugelfläche, deren Krümmung der Krümmung der Kugelfläche des Kugelkörpers entspricht.

Wahlweise weist der erste Dichtungsring in Axialrichtung an der auf den Kugelkörper gerichteten Seite einen die Zentralachse umringenden ringförmigen Konkavraum auf;
wobei die vom einen Axialende der aufgeweiteten Öffnung zum anderen Axialende weisende Richtung als Erstreckungsrichtung definiert ist, die Teilabschnitte des ersten Dichtungsrings, die sich in Erstreckungsrichtung an den beiden Seiten des ringförmigen Konkavraums befinden, jeweils so konstruiert sind, dass sie für einen Kontakt mit der Kugelfläche geeignet sind, womit der ringförmige Konkavraum geeignet ist, um mit der Kugelfläche einen ringförmigen geschlossenen Raum einzufassen.

Wahlweise ist die Dichtungsfläche eine wellenförmige Krümmungsfläche, wobei die wellenförmige Krümmungsfläche aus mehreren, in Erstreckungsrichtung abwechselnd angeordneten und miteinander verbundenen ringförmigen Konvexflächen und ringförmigen Konkavflächen gebildet ist, die wellenförmige Krümmungsfläche mindestens zwei ringförmige Konvexflächen und mindestens eine ringförmige Konkavfläche aufweist, die ringförmige Konkavfläche den ringförmigen Konkavraum einfasst und die Teilabschnitte an den ringförmigen Konvexflächen angeordnet sind; oder
die Dichtungsfläche ist eine Kugelfläche, deren Krümmung nicht der Krümmung der Kugelfläche des Kugelkörpers entspricht, wobei die Kugelfläche am ersten Dichtungsring den ringförmigen Konkavraum einfasst.

Wahlweise ist die vom einen Axialende der aufgeweiteten Öffnung zum anderen Axialende weisende Richtung als Erstreckungsrichtung definiert, wobei der erste Dichtungsring einen ersten und einen zweiten Einzelring umfasst, die in Erstreckungsrichtung mit einem Zwischenraum angeordnet sind;
und der zweite Dichtungsring weist in Axialrichtung an der auf den Kugelkörper gerichteten Seite einen die Zentralachse umringenden ringförmigen Konkavraum auf, wobei sich der ringförmige Konkavraum in Erstreckungsrichtung zwischen dem ersten und dem zweiten Einzelring befindet und der erste und der zweite Einzelring jeweils geeignet sind, um mit der Kugelfläche in Kontakt zu treten, sodass der ringförmige Konkavraum geeignet ist, um mit der Kugelfläche einen ringförmigen geschlossenen Raum einzufassen.

Wahlweise sind die Dichtungsflächen am ersten und zweiten Einzelring jeweils Kegelstumpfflächen;
und die Dichtungsflächen am ersten und zweiten Einzelring sind jeweils geeignet, um sich mit der Kugelfläche bei einem Vorkontakt zu schneiden; oder
die Dichtungsflächen am ersten und zweiten Einzelring sind jeweils geeignet, um bei einem Vorkontakt mit der Kugelfläche an dem in Erstreckungsrichtung näher zum ringförmigen Konkavraum befindlichen Ende mit der Kugelfläche in Kontakt zu treten, während zwischen dem anderen Ende und der Kugelfläche ein Zwischenraum besteht.

Wahlweise ist die Dicke des ersten Dichtungsrings kleiner als 1 mm.

Wahlweise ist der zweite Dichtungsring ein Gummiring und der erste und der zweite Dichtungsring sind durch Vulkanisieren fest miteinander verbunden.

Wahlweise umfasst das Dichtungsteil weiterhin einen Trägerring, der an der radialen Innenseite des zweiten Dichtungsrings angeordnet und fest mit dem zweiten Dichtungsring verbunden ist;
wobei der Trägerring an dem in Axialrichtung vom ersten Dichtungsring entfernteren axialen Endteil in Radialrichtung nach außen abgewinkelt ist und eine ringförmige Falzkante bildet und sich die Falzkante in Axialrichtung an einer Seite des zweiten Dichtungsrings befindet, oder, wobei das radiale Außenende der Falzkante vom zweiten Dichtungsring umschlossen wird.

Außerdem stellt die vorliegende Erfindung ein Kugelventil bereit, umfassend einen Kugelkörper mit einer Kugelfläche; eines der oben aufgeführten Dichtungsteile, wobei die Dichtungsfläche des ersten Dichtungsrings mit der Kugelfläche des Kugelkörpers in Kontakt steht, um eine Dichtung zu realisieren.

Im Vergleich zum Stand der Technik weist die technische Lösung der vorliegenden Erfindung folgende Vorteile auf:
Der erste Dichtungsring ist eine durch Stanzen geformte ringförmige PTFE-Scheibe. Erstens ist der Reibungskoeffizient von PTFE sehr niedrig und zweitens ist PTFE noch weicher als PVDF und der erste Dichtungsring kann unter noch geringerer Krafteinwirkung mit dem Kugelkörper eine Kontaktdichtung bilden, weshalb das Reibungsdrehmoment zwischen dem ersten Dichtungsring und der Kugelfläche des Kugelkörpers relativ klein ist, der erste Dichtungsring nicht so leicht verschleißt und nicht so leicht das Problem eines Verlusts der Dichtungswirkung auftritt. Außerdem ist bei einem durch Stanzen geformten ersten Dichtungsring der Bearbeitungsprozess im Vergleich zu anderen Bearbeitungsprozessen einfacher und es können unter Nutzung derselben Stanzform eine Massenproduktion des ersten Dichtungsrings realisiert, die Produktionseffizienz für das erste Dichtungsteil erheblich gesteigert und die Produktionskosten für das erste Dichtungsteil gesenkt werden.

### Beschreibung der beigefügten Figuren

Fig. 1 zeigt in einem ersten Ausführungsbeispiel der vorliegenden Erfindung eine Schnittdarstellung der Dichtungsfläche eines ersten Dichtungsrings, die mit der Kugelfläche eines Kugelkörpers in Kontakt steht, nachdem das Dichtungsteil am Kugelventil montiert wurde.
Fig; 2 zeigt eine Schnittdarstellung eines Dichtungsteils in einem ersten Ausführungsbeispiel der vorliegenden Erfindung.
Fig. 3 zeigt eine Schnittdarstellung eines Dichtungsteils in einem zweiten Ausführungsbeispiel der vorliegenden Erfindung.
Fig. 4 zeigt eine Schnittdarstellung eines Dichtungsteils in einem dritten Ausführungsbeispiel der vorliegenden Erfindung.
Fig. 5 zeigt eine Schnittdarstellung eines Dichtungsteils in einem vierten Ausführungsbeispiel der vorliegenden Erfindung.
Fig. 6 zeigt eine Schnittdarstellung eines Dichtungsteils in einem fünften Ausführungsbeispiel der vorliegenden Erfindung.
Fig. 7 zeigt eine Schnittdarstellung eines Dichtungsteils in einem sechsten Ausführungsbeispiel der vorliegenden Erfindung.

Bei allen der obenstehenden Schnittdarstellungen ist die Schnittfläche eine Schnittfläche der Zentralachse des Dichtungsteils.

### Ausführungsformen

Um die Aufgaben, Merkmale und Vorteile der vorliegenden Erfindung noch deutlicher und leichter verständlich zu machen, wird im Folgenden in Verbindung mit den beigefügten Figuren zu den konkreten Ausführungsbeispielen der vorliegenden Erfindung eine detaillierte Beschreibung gegeben.

### Erstes Ausführungsbeispiel

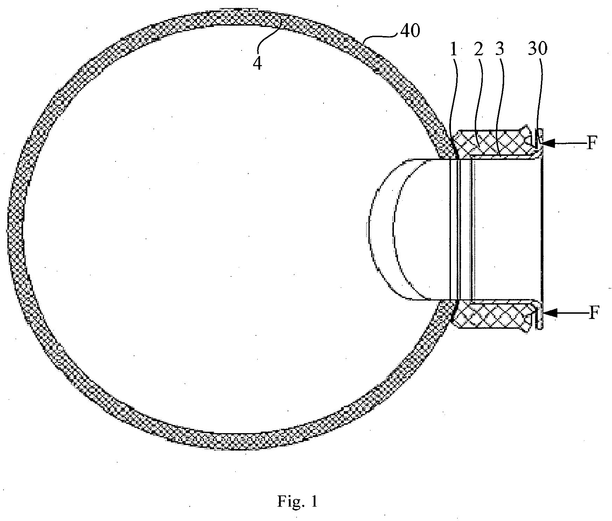

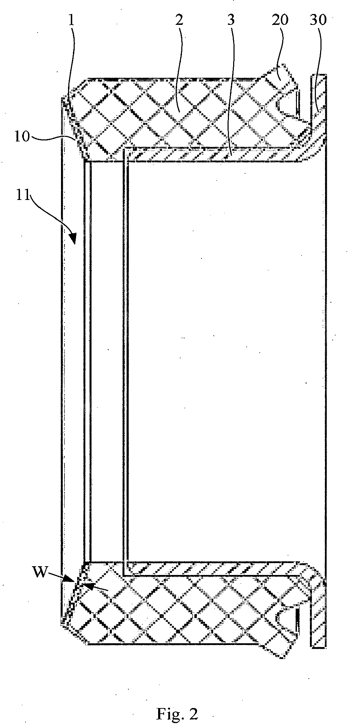

Wie in Verbindung mit Fig. 1 und Fig. 2 gezeigt, stellt das vorliegende Ausführungsbeispiel ein Dichtungsteil für ein Kugelventil bereit, umfassend einen ersten Dichtungsring 1 und einen zweiten Dichtungsring 2, wobei die Zentralachsen (in den Figuren nicht dargestellt) des ersten Dichtungsrings 1 und des zweiten Dichtungsrings 2 parallel angeordnet und ihre Materialien unterschiedlich sind. Der erste Dichtungsring 1 ist an der in Axialrichtung auf den Kugelkörper 4 im Kugelventil gerichteten Seite des zweiten Dichtungsrings 2 angeordnet und wird verwendet, um mit der Kugelfläche 40 des Kugelkörpers 4 in Kontakt zu treten und eine Dichtung zu realisieren und somit ein Entweichen des Mediums an der Kugelfläche 40 des Kugelkörpers 4 zu verhindern. In der technischen Lösung der vorliegenden Erfindung bezieht sich die sogenannte Axialrichtung immer auf die Axialrichtung des Dichtungsteils.

Der erste Dichtungsring 1 ist eine durch Stanzen geformte ringförmige PTFE(Polytetrafluoroethylene, Polytetrafluorethylen)-Scheibe, d. h. durch die Stanzbearbeitung des ringförmigen PTFE-Rohlings mit einer Stanzform wird dieser plastisch verformt und die benötigte Form gebildet, sodass man eine ringfömige PTFE-Scheibe erhält.

In der technischen Lösung der vorliegenden Erfindung wird der erste Dichtungsring 1 durch Stanzen geformt und nicht durch eine andere Fertigungstechnik (wie z. B. durch Drehen), weil der Bearbeitungsprozess beim Stanzen einfacher ist als bei den Bearbeitungsprozessen anderer Fertigungstechniken und weil unter Nutzung derselben Stanzform eine Massenproduktion des ersten Dichtungsrings 1 realisiert, die Produktionseffizienz für das erste Dichtungsteil 1 erheblich gesteigert und die Produktionskosten für das erste Dichtungsteil 1 gesenkt werden können.

Erstens ist der Reibungskoeffizient von PTFE sehr niedrig und zweitens ist PTFE noch weicher als PVDF und der erste Dichtungsring 1 kann unter noch geringerer Krafteinwirkung mit dem Kugelkörper 4 eine Kontaktdichtung bilden, weshalb das Reibungsdrehmoment zwischen dem ersten Dichtungsring 1 und der Kugelfläche 40 des Kugelkörpers 4 relativ klein ist, der erste Dichtungsring 1 nicht so leicht verschleißt und nicht so leicht das Problem eines Verlusts der Dichtungswirkung auftritt.

Nachdem das Dichtungsteil am Kugelventil montiert wurde, kann das Dichtungsteil in Axialrichtung einen Pressdruck F aufnehmen, wobei der Pressdruck F vom zweiten Dichtungsring 2 auf den ersten Dichtungsring 1 übertragen wird, sodass der erste Dichtungsring 1 verformt wird und die Dichtungsfläche 10 zu der Kugelfläche 40 des Kugelkörpers 4 einen engen Kontakt aufrechterhalten kann, um die Dichtung zu realisieren. Da der erste Dichtungsring 1 und der zweite Dichtungsring 2 fest miteinander verbunden sind, kann der zweite Dichtungsring 2 den scheibenförmigen und relativ dünnen ersten Dichtungsring 1 fest gegen die Kugelfläche 40 drücken und verhindern, dass der erste Dichtungsring 1 von der Kugelfläche 40 abrutscht und die Dichtungswirkung verloren geht.

In der vorliegenden Erfindung ist definiert, dass die Oberfläche des ersten Dichtungsrings 1, die für den Kontakt mit der Kugelfläche 40 des Kugelkörpers 4 verwendet wird, eine ringförmige Dichtungsfläche 10 ist. Im vorliegenden Ausführungsbeispiel ist der erste Dichtungsring 1 in Axialrichtung einer aufgeweiteten Öffnung 11 abgewandt, die von der ringförmigen Dichtungsfläche 10 des zweiten Dichtungsrings 2 eingefasst wird und in der technischen Lösung der vorliegenden Erfindung bezieht sich die sogenannte aufgeweitete Öffnung 11 darauf, dass sich der Öffnungsdurchmesser der Öffnung 11 in axialer vom zweiten Dichtungsring 2 auf den Kugelkörper 4 weisender Richtung vergrößert. Die Dichtungsfläche 10, welche die aufgeweitete Öffnung 11 einfasst, korrespondiert in etwa mit der Form der Kugelfläche 40 und wenn das Dichtungsteil in Axialrichtung gegen die Kugelfläche 40 des Kugelkörpers 4 stößt, kann zwischen der Dichtungsfläche 10 und der Kugelfläche 40 eine größere Kontaktfläche erzielt werden, um eine gute Dichtung zu realisieren.

Weiterhin ist im vorliegenden Ausführungsbeispiel die Dichtungsfläche 10 des ersten Dichtungsrings 1 eine Kegelstumpffläche und beim Vorkontakt mit der Kugelfläche 40 besteht zwischen der Dichtungsfläche 10 und der Kugelfläche 40 ein annähernd linearer Kontakt. In der technischen Lösung der vorliegenden Erfindung bezieht sich der sogenannte Vorkontakt darauf, dass, obwohl der erste Dichtungsring 1 mit der Kugelfläche 40 in Kontakt tritt, beim ersten Dichtungsring 1 trotzdem fast keine Verformung auftritt. Nachdem das Dichtungsteil am Kugelventil montiert wurde, besteht unter der Wirkung des Pressdrucks F zwischen der Dichtungsfläche 10 und der Kugelfläche 40 nicht länger ein linearer Kontakt, sondern ein flächiger Kontakt.

In der technischen Lösung der vorliegenden Erfindung ist der Vorteil der Konstruktion der Dichtungsfläche 10 als Kegelstumpffläche, dass sie einfach für die Bearbeitung mit einer Stanzform geeignet ist, womit eine einfache Bearbeitung des ersten Dichtungsrings 1 möglich wird.

Im vorliegenden Ausführungsbeispiel ist die (nicht gekennzeichnete) Oberfläche des zweiten Dichtungsrings 2, die mit dem ersten Dichtungsring 1 in Kontakt tritt, ebenfalls eine Kegelstumpffläche, deren Konizität gleich jener der Dichtungsfläche 10 ist, sodass die Dicke des ersten Dichtungsrings 1 überall gleich ist und die Bearbeitung des ersten Dichtungsrings 1 weiter vereinfacht wird.

Bei der Festlegung der Dicke W des ersten Dichtungsrings 1 sind viele Faktoren zu berücksichtigen, wie z. B. die Kosten für das Rohmaterial, die Lebensdauer des ersten Dichtungsrings 1 und die Fähigkeit der Dichtungsfläche 10, sich bei der Einwirkung des Pressdrucks F auf das Dichtungsteil zu verformen, um einen engen Kontakt mit der Kugelfläche 40 herzustellen etc. Je größer die Dicke W ist, desto höher sind die Kosten für das Rohmaterial und desto länger ist die Lebensdauer des ersten Dichtungsrings 1 und je schlechter die Fähigkeit der Dichtungsfläche 10 ist, sich bei der Einwirkung des Pressdrucks F auf das Dichtungsteil zu verformen, desto schlechter sind die Dichtungseigenschaften. Durch Forschung wurde herausgefunden, dass bei einer Festlegung der Dicke W des ersten Dichtungsrings 1 auf weniger als 1 mm, eine relativ gute Balance zwischen den Kosten für das Rohmaterial, der Lebensdauer des ersten Dichtungsrings 1 I und der Fähigkeit der Dichtungsfläche 10 zur Verformung erzielt werden kann. Natürlich kann die Dicke W des ersten Dichtungsrings 1 auch nicht den Beschränkungen des vorliegenden Ausführungsbeispiels unterliegen, wenn die Kosten für das Rohmaterial, die Lebensdauer des ersten Dichtungsrings 1 und die Fähigkeit der Dichtungsfläche 10 zur Verformung nicht berücksichtigt werden.

Im vorliegenden Ausführungsbeispiel umfasst das Dichtungsteil weiterhin einen Trägerring 3, wobei der Trägerring 3 an der radialen Innenseite des zweiten Dichtungsrings 2 angeordnet und fest mit dem zweiten Dichtungsring 2 verbunden ist. Der Trägerring 3 ist an dem in Axialrichtung vom ersten Dichtungsring 1 entfernteren axialen Endteil in Radialrichtung nach außen abgewinkelt und bildet eine ringförmige Falzkante 30, wobei sich die Falzkante 30 in Axialrichtung an einer Seite des zweiten Dichtungsrings 2 befindet. Nachdem das Dichtungsteil am Kugelventil montiert wurde, wird der vom Dichtungsteil aufgenommene Pressdruck F durch ein im komprimierten Zustand befindliches elastisches Teil (in den Figuren nicht dargestellt) auf die Falzkante 30 ausgeübt, wobei das elastische Teil eine Feder sein kann.

Im vorliegenden Ausführungsbeispiel weist der zweite Dichtungsring 2 an der in Axialrichtung vom ersten Dichtungsring 1 abgewandten Seite eine in Radialrichtung schräg nach außen erstreckte Dichtungslippe 20 auf, wobei "schräg" in diesem Fall "nicht senkrecht zur Zentralachse des zweiten Dichtungsrings 2" bedeutet und die Dichtungslippe 20 in Axialrichtung einen Zwischenraum zur Falzkante 30 aufweist. Die Dichtungslippe 20 wird verwendet, um mit dem an der radialen Außenseite des Dichtungsteils befindlichen Bauteil (in den Figuren nicht dargestellt) eine Kontaktdichtung zu bilden. Wenn die Dichtungslippe 20 mit dem Bauteil eine Kontaktdichtung bildet, verformt sie sich, wobei der Zwischenraum zwischen der Dichtungslippe 20 und der Falzkante 30 eine Verformung der Dichtungslippe 20 erlaubt und verhindert, dass sich die Dichtungslippe 20 und die Falzkante 30 gegenseitig behindern.

Im vorliegenden Ausführungsbeispiel ist der zweite Dichtungsring 2 ein Gummiring und der erste Dichtungsring 1 und der zweite Dichtungsring 2 sind durch Vulkanisieren fest miteinander verbunden. In einem anderen Ausführungsbeispiel kann der zweite Dichtungsring 2 auch aus anderen Materialien als PTFE gefertigt sein und der erste Dichtungsring 1 und der zweite Dichtungsring 2 können auch auf andere Weise befestigt sein.

Im vorliegenden Ausführungsbeispiel sind der Trägerring 3 und der zweite Dichtungsring 2 durch Presspassung fest miteinander verbunden oder der Trägerring 3 und der zweite Dichtungsring 2 sind durch Vulkanisieren fest miteinander verbunden. Dabei besitzt die letztere Befestigungsmethode gegenüber der ersteren Befestigungsmethode den Vorteil, dass das Medium nicht zwischen dem Trägerring 3 und dem zweiten Dichtungsring 2 entweichen kann. In einem anderen Ausführungsbeispiel können der Trägerring 3 und der zweite Dichtungsring 2 auch auf andere Weise befestigt sein.

Im vorliegenden Ausführungsbeispiel ist der Trägerring 3 ein Metallring.

### Zweites Ausführungsbeispiel

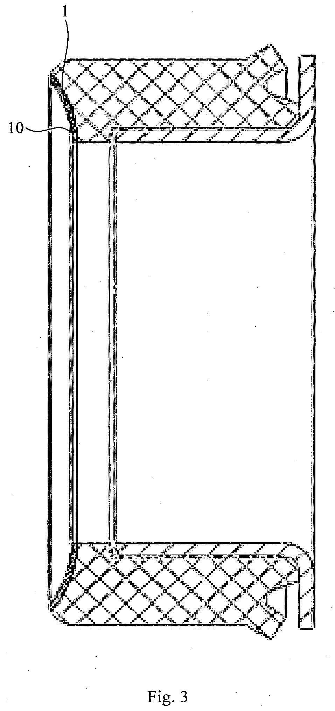

Der Unterschied des zweiten Ausführungsbeispiels zum ersten Ausführungsbeispiel ist, wie in Fig. 3 gezeigt, dass im zweiten Ausführungsbeispiel die Dichtungsfläche 10 des ersten Dichtungsrings 1 eine Kugelfläche ist, deren Krümmung der Krümmung der Kugelfläche des Kugelkörpers (in der Figur nicht dargestellt) entspricht, d. h. die Formen der Dichtungsfläche 10 und der Kugelfläche des Kugelkörpers stimmen überein und beim Vorkontakt der Dichtungsfläche 10 mit der Kugelfläche hat die gesamte Dichtungsfläche 10 mit der Kugelfläche Kontakt. Der Vorteil einer Konstruktion der Dichtungsfläche 10 als Kugelfläche ist, dass nach der Montage des Dichtungsteils am Kugelventil auf das Dichtungsteil in Axialrichtung ein relativ geringer Pressdruck ausgeübt und trotzdem gewährleistet werden kann, dass die Dichtungsfläche 10 einen engen Kontakt zur Kugelfläche aufrechterhält. Aufgrund des relativ geringen Pressdrucks ist das Reibungsdrehmoment zwischen dem ersten Dichtungsring 1 und der Kugelfläche relativ klein und der Verschleiß des ersten Dichtungsrings 1 wird weiter gesenkt.

### Drittes Ausführungsbeispiel

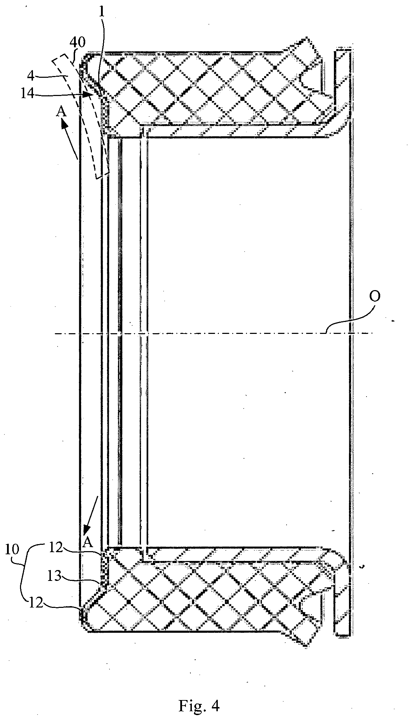

Der Unterschied des dritten Ausführungsbeispiels zum ersten Ausführungsbeispiel ist, wie in Fig. 4 gezeigt, dass im dritten Ausführungsbeispiel der erste Dichtungsring 1 an der in Axialrichtung auf den Kugelkörper 4 (in der Figur nur teilweise durch eine gestrichelte Linie dargestellt) gerichteten Seite einen die Zentralachse 0 umringenden ringförmigen Konkavraum 14 aufweist. Dabei ist die Richtung, die von dem einen Axialende der Dichtungsfläche 10, welches die aufgeweitete Öffnung einfasst, zum anderen Axialende weist, als Erstreckungsrichtung A definiert und nachdem das Dichtungsteil am Kugelventil montiert wurde, stehen alle Teilabschnitte des ersten Dichtungsrings 1, die sich in Erstreckungsrichtung A an den beiden Seiten des ringförmigen Konkavraums 14 befinden, mit der Kugelfläche 40 in Kontakt, sodass der ringförmige Konkavraum 14 und die Kugelfläche 40 einen ringförmigen geschlossenen Raum einfassen. Wenn das Medium an einem der Teilabschnitte entweicht, fließt es in den ringförmigen Konkavraum 14, sodass sich der Druck des Mediums stark verringert. Auf diese Weise kann unter der dichtenden Wirkung zwischen dem anderen Teilabschnitt und der Kugelfläche 40 trotzdem noch eine Leckage des Mediums mit dem stark verringerten Druck verhindert und somit die Dichtungswirkung erhöht werden.

Konkret ist im vorliegenden Ausführungsbeispiel die Dichtungsfläche 10 des ersten Dichtungsrings 1 eine wellenförmige Krümmungsfläche, wobei die wellenförmige Krümmungsfläche aus mehreren, in Erstreckungsrichtung A abwechselnd angeordneten und miteinander verbundenen ringförmigen Konvexflächen 12 und ringförmigen Konkavflächen 13 gebildet ist und die wellenförmige Krümmungsfläche mindestens zwei ringförmige Konvexflächen 12 und mindestens eine ringförmige Konkavfläche 13 aufweist. Die Anordnung in der Figur, bei der die wellenförmige Krümmungsfläche zwei ringförmige Konvexflächen 12 und eine ringförmige Konkavfläche 13 aufweist, ist ein Beispiel, aber in der technischen Lösung der vorliegenden Erfindung unterliegt die Anzahl der ringförmigen Konvexflächen 12 und der ringförmigen Konkavflächen 13 der Dichtungsfläche 10 nicht der Beschränkung aus der Figur.

Die ringförmige Konkavfläche 13 fasst den ringförmigen Konkavraum 14 ein und die Teilabschnitte des ersten Dichtungsrings 1, die sich in Axialrichtung an den beiden Seiten des ringförmigen Konkavraums 14 befinden, sind jeweils an den beiden ringförmigen Konvexflächen 12 angeordnet. Nachdem das Dichtungsteil am Kugelventil montiert wurde, stehen die beiden ringförmigen Konvexflächen 12 jeweils mit der Kugelfläche 40 in Kontakt, zwischen der ringförmigen Konkavfläche 13 und der Kugelfläche 40 besteht ein Zwischenraum und sie fassen einen geschlossenen Raum ein.

In einem konkreten Ausführungsbeispiel hat die Schnittfläche der ringförmigen Konvexflächen 12 und der ringförmigen Konkavfläche 13 in Radialrichtung des ersten Dichtungsteils 1 die Form einer Sinuskurve. In einem anderen Ausführungsbeispiel kann die Schnittfläche der ringförmigen Konvexflächen 12 und der ringförmigen Konkavfläche 13 in Radialrichtung des ersten Dichtungsteils 1 auch so konstruiert sein, dass sie die Form eines Bogens oder eine andere Krümmungsflächenform hat.

### Viertes Ausführungsbeispiel

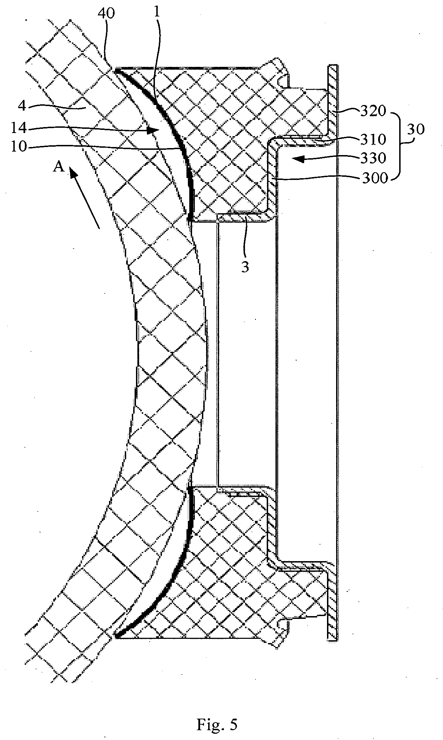

Der Unterschied des vierten Ausführungsbeispiels zum dritten Ausführungsbeispiel ist, wie in Fig. 5 gezeigt, dass im vierten Ausführungsbeispiel die Dichtungsfläche 10 des ersten Dichtungsrings 1 eine Kugelfläche ist, deren Krümmung nicht der Krümmung der Kugelfläche 40 des Kugelkörpers 4 entspricht, dass die Kugelfläche am ersten Dichtungsring 1 den ringförmigen Konkavraum 14 einfasst und die Schnittfläche des ringförmigen Konkavraums 14 in Radialrichtung die Form eines Kreissegments bildet. Nachdem das Dichtungsteil am Kugelventil montiert wurde, stehen die Dichtungsflächen 10 in Erstreckungsrichtung A an den beiden Enden des ringförmigen Konkavraums 14 jeweils mit der Kugelfläche 40 in Kontakt und der ringförmige Konkavraum 14 fasst mit der Kugelfläche 40 einen geschlossenen Raum ein.

Im vorliegenden Ausführungsbeispiel umfasst die Falzkante 30 am Trägerring 3 einen ringförmigen radial erstreckten Teil 300, einen ringförmigen axial erstreckten Teil 310 und einen ringförmigen radial erstreckten Teil 320, wobei der ringförmige radial erstreckte Teil 300 an der radialen Innenseite des ringförmigen axial erstreckten Teils 310 angeordnet ist, der ringförmige radial erstreckte Teil 320 an der radialen Außenseite des ringförmigen axial erstreckten Teils 310 angeordnet ist und die beiden Axialenden des ringförmigen axial erstreckten Teils 310 jeweils mit einem Ende des ringförmigen radial erstreckten Teils 300 und des ringförmigen radial erstreckten Teils 320 fest verbunden sind.

Der ringförmige radial erstreckte Teil 300 und der ringförmige axial erstreckte Teil 310 fassen einen Hohlraum 330 ein und in dem Hohlraum 330 kann eine im komprimierten Zustand befindliche Schraubenfeder (in der Figur nicht dargestellt) angeordnet sein, deren eines Axialende gegen den ringförmigen radial erstreckten Teil 300 stößt, um auf das Dichtungsteil in Axialrichtung einen Pressdruck auszuüben und somit den ersten Dichtungsring 1 fest gegen Kugelkörper 4 zu drücken und der ringförmige axial erstreckte Teil 310 wird verwendet, um auf die Schraubenfeder eine Begrenzungswirkung auszuüben und zu verhindern, dass diese in Radialrichtung schwankt.

### Fünftes Ausführungsbeispiel

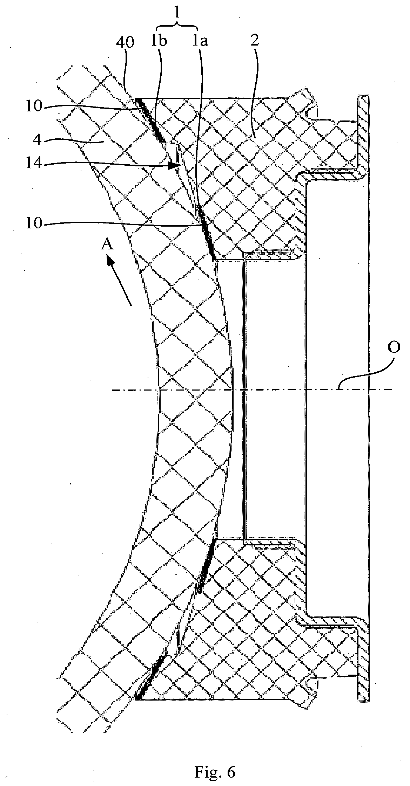

Der Unterschied des fünften Ausführungsbeispiels zum ersten Ausführungsbeispiel ist, wie in Fig. 6 gezeigt, dass im fünften Ausführungsbeispiel der erste Dichtungsring 1 einen ersten Einzelring 1a und einen zweiten Einzelring 1b umfasst, die in Erstreckungsrichtung A mit einem Zwischenraum angeordnet sind und dass der zweite Dichtungsring 2 an der in Axialrichtung auf den Kugelkörper 4 gerichteten Seite einen die Zentralachse 0 umringenden ringförmigen Konkavraum 14 aufweist, wobei der ringförmige Konkavraum 14 in Erstreckungsrichtung A zwischen dem ersten Einzelring 1a und dem zweiten Einzelring 1b angeordnet ist und die Schnittfläche des ringförmigen Konkavraums 14 in Radialrichtung des Dichtungsteils die Form eines stumpfwinkligen Dreiecks bildet. Nachdem das Dichtungsteil am Kugelventil montiert wurde, stehen der erste Einzelring 1a und der zweite Einzelring 1b jeweils mit der Kugelfläche 40 in Kontakt und die ringförmige Konkavfläche 14 und die Kugelfläche 40 fassen einen geschlossenen Raum ein. Wenn das Medium an einem der Einzelringe entweicht, fließt es in den ringförmigen Konkavraum 14, sodass sich der Druck des Mediums stark verringert. Auf diese Weise kann unter der Kontaktwirkung zwischen dem anderen Einzelring und der Kugelfläche 40 trotzdem noch eine Leckage des Mediums mit dem stark verringerten Druck verhindert und somit die Dichtungswirkung erhöht werden.

Im vorliegenden Ausführungsbeispiel sind die Dichtungsflächen 10 des ersten Einzelrings 1a und des zweiten Einzelrings 1b jeweils Kegelstumpfflächen und beim Vorkontakt des ersten Dichtungsrings 1 mit der Kugelfläche 40 schneiden sich die Kegelstumpfflächen des ersten Einzelrings 1a und des zweiten Einzelrings 1b jeweils mit der Kugelfläche 40, d. h. bei beiden besteht ein linearer Kontakt. Nachdem das Dichtungsteil am Kugelventil montiert wurde, besteht unter der Wirkung des in Axialrichtung ausgeübten Pressdrucks zwischen den Kegelstumpfflächen am ersten Einzelring 1a und am zweiten Einzelring 1b und der Kugelfläche 40 nicht länger ein linearer Kontakt, sondern ein flächiger Kontakt.

### Sechstes Ausführungsbeispiel

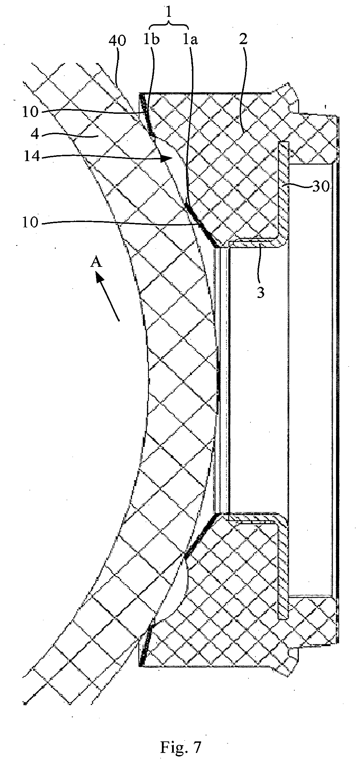

Der Unterschied des sechsten Ausführungsbeispiels zum fünften Ausführungsbeispiel ist, wie in Fig. 7 gezeigt, dass im sechsten Ausführungsbeispiel die Schnittfläche des ringförmigen Konkavraums 14 am zweiten Dichtungsring 2 in Radialrichtung ein Kreissegment bildet und dass die Dichtungsflächen 10 des ersten Einzelrings 1a und des zweiten Einzelrings 1b jeweils Kegelstumpfflächen sind, wobei beim Vorkontakt des ersten Dichtungsrings 1 mit der Kugelfläche 40 die Dichtungsfläche 10 des ersten Einzelrings 1a in Erstreckungsrichtung A an dem näher zum ringförmigen Konkavraum 14 befindlichen Ende mit der Kugelfläche 40 in Kontakt tritt, während zwischen dem anderen Ende und der Kugelfläche 40 ein Zwischenraum besteht und die Dichtungsfläche 10 des zweiten Einzelrings 1b in Erstreckungsrichtung A an dem näher zum ringförmigen Konkavraum 14 befindlichen Ende mit der Kugelfläche 40 in Kontakt tritt, während zwischen dem anderen Ende und der Kugelfläche 40 ein Zwischenraum besteht.

Im vorliegenden Ausführungsbeispiel wird das radiale Außenende der Falzkante 30 des Trägerrings 3 vom zweiten Dichtungsring 2 umschlossen, d. h. das radiale Außenende der Falzkante 30 und der zweite Dichtungsring 2 sind fest miteinander verbunden, wodurch die Festigkeit der Verbindung zwischen dem Trägerring 3 und dem zweiten Dichtungsring 2 verstärkt wird.

Es muss gesagt werden, dass in der technischen Lösung der vorliegenden Erfindung die Form des ringförmigen Konkavraums am ersten Dichtungsring beliebig gewählt werden kann und nicht durch die angegebenen Ausführungsbeispiele beschränkt ist. Darüber hinaus unterliegt die Form des ersten und des zweiten Einzelrings keinen Beschränkungen durch die angegebenen Ausführungsbeispiele und es muss lediglich gegeben sein, dass beim Kontakt des ersten Dichtungsrings mit der Kugelfläche der erste und der zweite Einzelring jeweils mit der Kugelfläche des Kugelkörpers in Kontakt treten können, um eine Dichtung zu realisieren. Dabei ist es nicht unbedingt erforderlich, dass die Dichtungsfläche am ersten Dichtungsring die aufgeweitete Öffnung einfasst und ihre Form unterliegt ebenfalls keinen Beschränkungen durch die angegebenen Ausführungsbeispiele, sondern es muss lediglich gegeben sein, dass beim Kontakt des ersten Dichtungsrings mit der Kugelfläche der Kontaktbereich der Dichtungsfläche mit der Kugelfläche ein die Zentralachse des ersten Dichtungsrings umringender ringförmiger geschlossener Bereich ist.

In allen der obenstehenden Ausführungsbeispiele ist die mit dem ersten Dichtungsring in Kontakt tretende Oberfläche des zweiten Dichtungsrings so konstruiert, dass sie die gleiche Form aufweist, wie die Dichtungsfläche des ersten Dichtungsrings, wobei aber gesagt werden muss, dass in einem anderen Ausführungsbeispiel die mit dem ersten Dichtungsring in Kontakt tretende Oberfläche des zweiten Dichtungsrings auch so konstruiert sein kann, dass sie nicht die gleiche Form aufweist, wie die Dichtungsfläche des ersten Dichtungsrings.

Auf Grundlage des oben beschriebenen Dichtungsteils stellt die vorliegende Erfindung außerdem ein Kugelventil bereit, umfassend einen Kugelkörper mit einer Kugelfläche, einen Ventilstab zur Mitnahme und zum Drehen des Kugelventils sowie ein wie oben beschriebenes Dichtungsteil, wobei die Dichtungsfläche des ersten Dichtungsrings mit der Kugelfläche eines Kugelkörpers in Kontakt steht, um eine Dichtung zu realisieren. Der Kugelkörper weist mehrere Passagen für das Durchfließen eines Mediums auf, durch das Drehen des Ventilstabs kann der Kugelkörper mitgenommen und gedreht werden, womit die Passagen geöffnet oder geschlossen werden und die Fließbewegung des Mediums gestartet oder unterbrochen wird.

In einem Ausführungsbeispiel beträgt die Anzahl der Passagen des Kugelkörpers eins und das Kugelventil weist eine Eingangsleitung und eine Ausgangsleitung auf. Wenn der Ventilstab so gedreht wird, dass die Passage zur Eingangs- und Ausgangsleitung versetzt ist, ist die Passage geschlossen und das Kugelventil unterbricht die Fließbewegung des Mediums. Wenn der Ventilstab so gedreht wird, dass die Passage auf die Eingangs- und Ausgangsleitung ausgerichtet ist, ist die Passage geöffnet und das Kugelventil startet die Fließbewegung des Mediums.

In einem anderen Ausführungsbeispiel beträgt die Anzahl der Passagen des Kugelkörpers zwei oder mehr und bei der Eingangsleitung und der Ausgangsleitung des Kugelventils beträgt die Anzahl von mindestens einer der beiden zwei oder mehr. Wenn der Ventilstab so gedreht wird, dass jede beliebige Passage zu jeder beliebigen Eingangs- und Ausgangsleitung versetzt ist, sind die Passagen geschlossen und das Kugelventil unterbricht die Fließbewegung des Mediums. Wenn der Ventilstab so gedreht wird, dass eine der Passagen auf eine der Eingangs- und Ausgangsleitungen ausgerichtet ist, ist die Passage geöffnet und das Kugelventil startet die Fließbewegung des Mediums. Wenn eine Passage auf unterschiedliche Eingangs- und Ausgangsleitungen ausgerichtet wird, kann die Fließrichtung des Mediums verändert werden.

In einem Kugelventil der vorliegenden Erfindung kann der Ventilstab sowohl manuell als auch elektrisch gesteuert werden. Wenn der Ventilstab elektrisch gesteuert wird, die Anzahl der Passagen am Kugelkörper zwei oder mehr beträgt und bei der Eingangsleitung und der Ausgangsleitung des Kugelventils die Anzahl von mindestens einer der beiden zwei oder mehr beträgt, ist eine Form der Anwendung die Verwendung des Kugelventils für ein Wärmemanagementmodul (Thermal Management Module, kurz TMM), das am Motor eines Automobils montiert wird und die Fließrichtung eines Kühlmittels steuert, um bei zu niedriger Motortemperatur den Motor zu erwärmen und bei zu hoher Motortemperatur den Motor zu kühlen, sodass der Motor immer bei einer geeigneten Temperatur betrieben wird. Natürlich kann das von der vorliegenden Erfindung bereitgestellte Kugelventil auch in anderen Bereichen verwendet werden.

In der vorliegenden Erfindung wird für jedes Ausführungsbeispiel eine weiterführende Form der Beschreibung verwendet, der Schwerpunkt der Beschreibung liegt auf den Unterschieden zu den vorangegangenen Ausführungsbeispielen und für die Gemeinsamkeiten der einzelnen Ausführungsbeispiele können die vorangegangenen Ausführungsbeispiele als Referenz verwendet werden.

Obwohl die vorliegende Erfindung wie obenstehend offengelegt wurde, ist sie doch nicht darauf beschränkt. Ein beliebiger Fachmann des technischen Gebiets kann, ohne Idee und Umfang der vorliegenden Erfindung zu verlassen, alle Arten von Veränderungen und Korrekturen vornehmen. Daher gilt als Schutzumfang der vorliegenden Erfindung der in den Patentansprüchen festgelegte Umfang.

## Patentansprüche

1. Ein Dichtungsteil für ein Kugelventil, das Dichtungsteil umfassend einen zur Zentralachse parallelen ersten und zweiten Dichtungsring, wobei die Materialien des ersten und zweiten Dichtungsrings unterschiedlich sind, der erste Dichtungsring an der in Axialrichtung auf den Kugelkörper im Kugelventil gerichteten Seite des zweiten Dichtungsrings angeordnet ist und verwendet wird, um mit der Kugelfläche des Kugelkörpers in Kontakt zu treten und eine Dichtung zu realisieren;
**dadurch gekennzeichnet, dass** der erste und der zweite Dichtungsring fest angeordnet sind und der erste Dichtungsring eine durch Stanzen geformte ringförmige PTFE-Scheibe ist.

2. Dichtungsteil nach Anspruch 1, **dadurch gekennzeichnet, dass** der erste Dichtungsring in Axialrichtung einer aufgeweiteten Öffnung abgewandt ist, die von einer ringförmigen Dichtungsfläche des zweiten Dichtungsrings eingefasst wird.

3. Dichtungsteil nach Anspruch 2, **dadurch gekennzeichnet, dass** die Dichtungsfläche eine Kegelstumpffläche ist.

4. Dichtungsteil nach Anspruch 2, **dadurch gekennzeichnet, dass** die Dichtungsfläche eine Kugelfläche ist, deren Krümmung der Krümmung der Kugelfläche des Kugelkörpers entspricht.

5. Dichtungsteil nach Anspruch 2, **dadurch gekennzeichnet, dass** der erste Dichtungsring in Axialrichtung an der auf den Kugelkörper gerichteten Seite einen die Zentralachse umringenden ringförmigen Konkavraum aufweist;
wobei die vom einen Axialende der aufgeweiteten Öffnung zum anderen Axialende weisende Richtung als Erstreckungsrichtung definiert ist, die Teilabschnitte des ersten Dichtungsrings, die sich in Erstreckungsrichtung an den beiden Seiten des ringförmigen Konkavraums befinden, jeweils so konstruiert sind, dass sie für einen Kontakt mit der Kugelfläche geeignet sind, womit der ringförmige Konkavraum geeignet ist, um mit der Kugelfläche einen ringförmigen geschlossenen Konkavraum einzufassen.

6. Dichtungsteil nach Anspruch 5, **dadurch gekennzeichnet, dass** die Dichtungsfläche eine wellenförmige Krümmungsfläche ist, wobei die wellenförmige Krümmungsfläche aus mehreren in Erstreckungsrichtung abwechselnd angeordneten und miteinander verbundenen ringförmigen Konvexflächen und ringförmigen Konkavflächen gebildet ist, die wellenförmige Krümmungsfläche mindestens zwei ringförmige Konvexflächen und mindestens eine ringförmige Konkavfläche aufweist, die ringförmige Konkavfläche den ringförmigen Konkavraum einfasst und die Teilabschnitte an den ringförmigen Konvexflächen angeordnet sind; oder
die Dichtungsfläche eine Kugelfläche ist, deren Krümmung nicht der Krümmung der Kugelfläche des Kugelkörpers entspricht, wobei die Kugelfläche am ersten Dichtungsring den ringförmigen Konkavraum einfasst.

7. Dichtungsteil nach Anspruch 2, **dadurch gekennzeichnet, dass** die vom einen Axialende der aufgeweiteten Öffnung zum anderen Axialende weisende Richtung als Erstreckungsrichtung definiert ist, wobei der erste Dichtungsring einen ersten und einen zweiten Einzelring umfasst, die in Erstreckungsrichtung mit einem Zwischenraum angeordnet sind;
und der zweite Dichtungsring in Axialrichtung an der auf den Kugelkörper gerichteten Seite einen die Zentralachse umringenden ringförmigen Konkavraum aufweist, wobei sich der ringförmige Konkavraum in Erstreckungsrichtung zwischen dem ersten und dem zweiten Einzelring befindet und der erste und der zweite Einzelring jeweils geeignet sind, um mit der Kugelfläche in Kontakt zu treten, sodass der ringförmige Konkavraum geeignet ist, um mit der Kugelfläche einen ringförmigen geschlossenen Raum einzufassen.

8. Dichtungsteil nach Anspruch 7, **dadurch gekennzeichnet, dass** die Dichtungsflächen am ersten und zweiten Einzelring jeweils Kegelstumpfflächen sind;
wobei die Dichtungsflächen am ersten und zweiten Einzelring jeweils geeignet sind, um bei einem Vorkontakt mit der Kugelfläche einander zu schneiden; oder
die Dichtungsflächen am ersten und zweiten Einzelring jeweils geeignet sind, um bei einem Vorkontakt mit der Kugelfläche an dem in Erstreckungsrichtung näher zum ringförmigen Konkavraum befindlichen Ende mit der Kugelfläche in Kontakt zu treten, während zwischen dem anderen Ende und der Kugelfläche ein Zwischenraum besteht.

9. Dichtungsteil nach Anspruch 1, **dadurch gekennzeichnet, dass** die Dicke des ersten Dichtungsrings kleiner als 1 mm ist.

10. Dichtungsteil nach einem der Ansprüche 1 bis 9, **dadurch gekennzeichnet, dass** der zweite Dichtungsring ein Gummiring ist und der erste und der zweite Dichtungsring durch Vulkanisieren fest miteinander verbunden sind.

11. Dichtungsteil nach einem der Ansprüche 1 bis 9, **dadurch gekennzeichnet, dass** das Dichtungsteil weiterhin einen Trägerring umfasst, der an der radialen Innenseite des zweiten Dichtungsrings angeordnet und fest mit dem zweiten Dichtungsring verbunden ist;
wobei der Trägerring an dem in Axialrichtung vom ersten Dichtungsring entfernteren axialen Endteil in Radialrichtung nach außen abgewinkelt ist und eine ringförmige Falzkante bildet und sich die Falzkante in Axialrichtung an einer Seite des zweiten Dichtungsrings befindet, oder, wobei das radiale Außenende der Falzkante vom zweiten Dichtungsring umschlossen wird.

12. Ein Kugelventil, **dadurch gekennzeichnet, dass** es Folgendes umfasst:
einen Kugelkörper, der eine Kugelfläche aufweist;
und ein Dichtungsteil nach einem der Ansprüche 1 bis 11, wobei die Dichtungsfläche des ersten Dichtungsrings mit der Kugelfläche des Kugelkörpers in Kontakt steht, um eine Dichtung zu realisieren.
